# EUROPEAN PATENT SPECIFICATION

(11) **EP 2 991 928 B1**
(45) Date of publication and mention of the grant of the patent: **25.01.2017**
(21) Application number: 14739961.2
(22) Date of filing: 30.04.2014
(51) Int. Cl.: C01B 3/08, C25B 5/00, H01M 10/36

(54) **REACTOR FOR PRODUCTION OF HYDROGEN AND ZINC OXIDE STARTING FROM A SOLUTION CONTAINING CARBOHYDRATES**
REAKTOR ZUR HERSTELLUNG VON WASSERSTOFF UND ZINKOXID, AUSGEHEND VON EINER LÖSUNG MIT KOHLEHYDRATEN
RÉACTEUR POUR LA PRODUCTION D'HYDROGÈNE ET D'OXYDE DE ZINC À PARTIR D'UNE SOLUTION CONTENANT DES HYDRATES DE CARBONE

(30) Priority: 02.05.2013 IT RM20130258
(43) Date of publication of application: 09.03.2016
(73) Proprietor: Cenci, Maurizio, 00165 Roma RM (IT); Facchiano, Giovanni, 06065 Passignano sul Trasimeno (PG) (IT); Liberati, Antonio, 01017 Tuscania (VT) (IT)
(72) Inventor: Cenci, Maurizio, 00165 Roma RM (IT); Facchiano, Giovanni, 06065 Passignano sul Trasimeno (PG) (IT); Liberati, Antonio, 01017 Tuscania (VT) (IT)
(74) Representative: Iannone, Carlo Luigi
(86) International application number: PCT/IT2014/000125
(87) International publication number: WO 2014/178090

(56) References cited:
- CA-A1- 2 569 128
- DE-A1- 3 643 352
- US-A- 4 797 190
- US-A1- 2008 190 781
- DANE C. HANSEN ET AL: "Viologen Catalyst for Direct-Carbohydrate Fuel Cell", ECS TRANSACTIONS, vol. 16, 1 January 2008 (2008-01-01), pages 2057-2063, XP055142455, ISSN: 1938-5862, DOI: 10.1149/1.2982045

## Description

The present invention refers to a reactor for the production of hydrogen and zinc oxide starting from a solution containing carbohydrates and electric power, the latter being generated by chemical reactions which are triggered.

The research the present invention is based on was stimulated by the well known need to find energy sources alternative to the use of fossil fuels. Particularly the present invention forms part of the so-called "hydrogen production chain", in the step of production thereof in order to feed fuel cells (for the production of electric power) or combustors (for the production of thermal energy) with the produced gas, or to be stored, for example in metallic hydride based tanks.

The hydrogen production is commonly obtained starting from hydrocarbons and fossil fuel by a chemical process.

Hydrogen can also be extracted from the water, by biological production from algae (bioreactors)), or using electricity (via electrolysis), or heat (via thermolysis); these methods are less efficient for a large amount production with respect to the hydrocarbon based chemical process.

However above said known technologies display various problems in order to be successfully inserted at best on global commercial market, mainly because of the low obtainable yields. The large scale production of hydrogen usually is carried out by means of natural gas reforming process (or "steam reforming"), the unique currently cost effective process.

However, this process has the drawback of the CO₂ release.

On the other hand alternative methods, like the partial hydrocarbon oxidation, result in the CO release. Moreover there are known techniques that associate the production of a "main product", like for example hydrogen, to the production of a second industrially interesting product, as for example metallic oxides. The zinc oxide is produced by the oxidation of metallic zinc vapor at high temperatures, according to two routes: i.e. direct and indirect method.

According to the directed method, the metallic zinc is vaporized inside of special tightly closed high temperature resistant containers. The metallic zinc vapors react with air oxygen to form zinc oxide.

According to the indirect method, zinc containing minerals or concentrated heated zinc sulphite are mixed with coal. In a reducing furnace, the mineral is reduced to metallic zinc and vaporized zinc reacts with oxygen to form zinc oxide, ZnO. Depending on the type of chemical reaction the obtained zinc oxide has different qualities. In all the cases it is necessary to reach high temperatures, with remarkable energetic consumption.

Further on the base of the environmental more and more severe regulations, it is necessary to find solutions for industrial productions suitable to reduce increasingly environmental impact thereof, with particular reference to the processing and disposal of the process residual products. Particularly, recently, the attention has been focused more and more towards approaches with enormous development potentiality, characterized by the possibility to combine disposal and recovery with industrial production processes, providing also the production of similarly industrially interesting by-products.

In the light of above exposed, the need to be able to provide a system overcoming the disadvantages of known methods is apparent.

In this context is inserted the finding according to the present invention, the aim of which is to provide a system containing metallic plates for the hydrogen production with high yield, starting from a solution of electrolytes and carbohydrates, suitable to develop large hydrogen amount from the transformation of metals, transforming the same in oxides suitable for several industrial and energetic fields.

Large part of the search the present invention is based on was dedicated to study the effects of the temperature, pH, electrolyte types and concentrations, intensity of electrical current withdrawn on the H₂ production. In the course of these studies it has been envisaged to add to the solution a molecule with high hydrogen atom number.

It has been surprisingly found, according to the invention, that carbohydrates, and in particular monosaccharides and disaccharides, are the more effective hydrogen source, allowing to multiply at least by 3 the production of H₂ in the unit of time. Therefore in the solution used in the reactor according to the invention monosaccharides and/or disaccharides, and sodium hydroxide or potassium hydroxide are present. In addition to the cell where the chemical reactions occur the reactor is completed by a system for the dosing of sodium hydroxide or potassium hydroxide and a system for the re-circulating and filtering of the electrolyte solution.

In order to improve the environmental sustainability of the whole process, the carbohydrates contained in the solution used in the invention can be prepared starting from molasses or other waste products, like spontaneously growing vegetal type species, to be subjected to boiling and filtering processes, thus allowing more and more echo-compatible systems, according to the new regulations for the environmental respect and sustainability, to be developed.

The invention is susceptible to be embodied according to two different configurations, differing in that the same are suitable respectively to the production only of hydrogen or the combined production of hydrogen and electric power.

In the cell the plates are made of two metals, representing the two electrodes. One of the two metals is always Zinc, the other can be a transition metal, such metal being suitably be Scandium, Titanium, Vanadium, Chromium, Manganese, Iron, Cobalt, Nickel or Copper, particularly Iron. The yield in terms of hydrogen and zinc oxide is variable according to selected metal, particularly several commercially available alloys. Analogously the economic yield is varied, according to the cost of starting material feeding and obtained energetic yield.

It is therefore a specific object of the present invention a reactor for the production of hydrogen and zinc oxide and electric power, said reactor comprising a container, within which there are provided a cell and a solution, said cell providing at least two first zinc elements or plates and at least two second metallic elements or plates, said first and second plates being connected by short-circuit or on external load, said solution comprising at least water, CₙH₂ₙOₙ (n = 3, 4, 5, 6 or 7) and sodium hydroxide or potassium hydroxide, said water, CₙH₂ₙOₙ (n = 3, 4, 5, 6 or 7) and sodium hydroxide or potassium hydroxide, being present in said solution, respectively, according to the following weight ratios:

| | |
|---|---|
| water (H₂O) | 1000g |
| CₙH₂ₙOₙ (n = 3, 4, 5, 6 or 7) | 10g - 700g |

sodium hydroxide(NaOH) or potassium hydroxide(KOH) 10g - 700g,
said cell (100) being immersed within said solution. Preferably, according to the invention, n = 6 (hexose monosaccharides)
Again according to the invention, said solution can provide further C₁₂H₂₂O₁₁ (insoluble disaccharides other than saccharose and maltose)
Again according to the invention said solution further provides fructoligosaccharides (FOS).
Further according to the invention said at least two second metallic elements or plates are made of a transition metal.

Particularly according to the invention said metal can be chromium, iron, cobalt, nickel, copper, scandium, titanium, vanadium, manganese, particularly iron.

In addition the invention concerns a method for the production of hydrogen and zinc oxide, comprising the steps of:
- insertion in a container of at least two first zinc elements or plates and at least two second metallic elements or plates (2);
- insertion in said container of a solution as above defined;
- extraction of obtained hydrogen and zinc oxide and possibly withdrawal of the electric power produced by the chemical reaction.

Preferably according to the invention said at least two second metallic elements or plates are made of a transition metal, particularly chromium, iron, cobalt, nickel, copper, scandium, titanium, vanadium, manganese, particularly iron.

Again according to the invention a plurality of elements is provided, alternatively embodied by said at least two first zinc elements or plates and said at least two second metallic elements or plates.

The present invention now will be described, by an illustrative, but not limitative way, according to preferred embodiments thereof, with particular reference to the figures of the enclosed drawings, wherein:
figure 1 is a schematic view of a cell for a reactor according to the invention;
figure 2 is a schematic view of a reactor according to the invention, containing the cell of figure 1;
figure 3 is a cross-section view of a reaction system with reactor according to the invention;
figure 4 shows a purity certificate; and
figure 5 shows an analysis of the solid deposit.

In the various figures like numerical references will be used in order to indicate like or similar parts of the different embodiments.

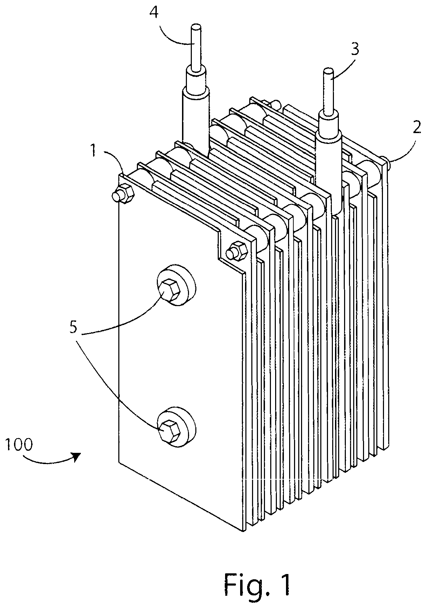

Firstly observing figure 1 an embodiment of a cell is shown, indicated generically with numerical reference 100, with zinc 1 and iron 2 plates, respectively. The zinc plates 1 are parallely connected by contact collector 3, while iron plates 2 are parallely connected by contact collector 4.

The iron 2 and zinc plates 1 are alternatively arranged, isolated thereamong by spacers 19 made of an insulating material, and blocked by blocking means 5 made of an insulating material. In the specific example, said blocking means comprise two bolts. Thus composed cell 100 will be suitable to deliver both hydrogen and electric power from contact collectors 3 and 4.

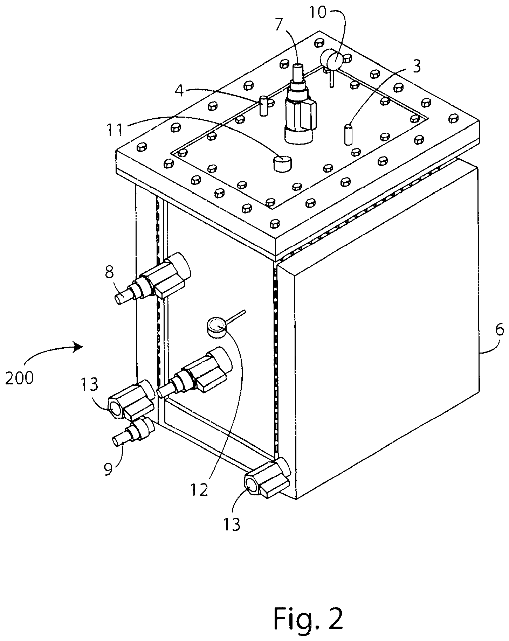

Observing now figure 2, the reactor, indicated generically by numerical reference 200 is shown, containing cell 100 with zinc 1 and iron 2 plates, for the production of hydrogen, zinc oxide and electric power.

Externally to reactor 200 the contact collectors 3 and 4 connected to iron 2 and zinc 1 plates exit, for the electric power withdrawal.

With numerical reference 6 the jacket of the liquid heating circuit in reactor 200 is shown, while with numerical reference 7 the tubing with valve for the hydrogen output is indicated.

Moreover there are provided a calibrated safety valve 11, and a pressure gauge 10.

Laterally to reactor 200 the valve of the liquid injection tubing 8 and a valve 9 for liquid suction from the reactor are shown.

Moreover, reactor 200 provides a thermometer 12 and a tubing with input and output valves 13, necessary for the regulation for the temperature keeping.

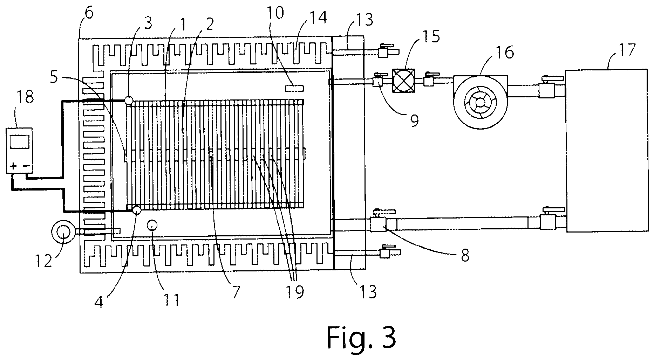

Observing now figure 3, a cross-section of the complete reaction system of heating coil 14 is shown, in order to maintain constant the temperature of the liquid, a liquid suction pump 15, a centrifuge 16 for the purification of liquid zinc oxide, a tank 17 for storage of the centrifuged and filtered liquid and a switchboard 18 with withdrawal of the produced electric power.

The heating circuit can be operated by electricity, air or a diathermic fluid, anyway suitable to maintain the temperature of the liquid at 15°C to 40°C in order to increase or decrease the hydrogen amount to be produced; an electric heating circuit powered by self-produced energy is preferred.

By introducing the solution consisting of sodium hydroxide or potassium hydroxide and carbohydrates in the reactor 200 containing zinc 1 and iron plates 2, maintaining opened the electric circuit 18, hydrogen will not be produced. By closing the electric circuit 18 (see figure 3), the circulation of self-produced electric power starts.

When circuit 18 is closed, the reactor cell 100 acts like a galvanic cell, wherein zinc plates 1 are the anode and iron plates 2 are the cathode.

The NaOH electrolyte in solution is present as Na⁺ and OH⁻ ions. Similarly, the KOH electrolyte is present as K⁺ and OH⁻ ions. Analogously to the phenomenon of the galvanic corrosion, in correspondence of the electrolyte/zinc electrode 1 interface the oxidation reaction occurs:

[2] Zn -> Zn²⁺ + 2e⁻

[3] Zn²⁺ + H₂O -> ZnO + 2H⁺

while in correspondence of the electrolyte/iron electrode 2 interface the reduction reaction occurs:

[4] 2H⁺ + 2e⁻ -> H₂

Thus the complete reaction is:

[5] Zn + H₂O -> ZnO + H₂

Said redox reaction is the way through which zinc oxide is generated and one of the two systems through which hydrogen in the reactor is produced.

The second system results from the reactions involving carbohydrates. As better specified according to the description of the preparation method of the electrolytic solution, at the end of the preparation process the sugars are in the form of glucose, fructose and mannose under stable equilibrium conditions among isomeric forms thereof.

Such isomers are separated under the action of the electrical current resulting in the production of methanol and formic acid, releasing molecular hydrogen:

[6] C₆H₁₂O₆ + 4H₂0 -> 2CH₃OH + 4HCOOH + 2H₂

By closing the circuit the hydrogen will be produced stepwise, reaching in a few minutes the steady-state conditions thereof.

In order to stop the hydrogen production it is enough the electric circuit 18 to be opened. This characteristic is of primary importance for all the applications where it is necessary to control the start and the stop of the reactions of hydrogen production. The voltage difference measured between collectors 3 and 4 depends on the pair of used metals, while the current intensity will depend on the plates' surface and can vary from few milliamperes to some hundred amperes.

The amount of produced hydrogen is different in the event that the circuit is closed on an external load rather than in short circuit. The produced hydrogen amount is maximal under short circuit conditions. It decreases with the increase of external load resistance. This phenomenon is explained with the fact that the current intensity circulating in the cell decreases with the increase of the resistive load.

The reaction rate, under the same reactor geometric characteristics, is affected by two main factors:
- the concentration of NaOH or KOH;
- the operating temperature in the reactor.

For this purpose the circulation of a thermal vector fluid is provided, which fluid can be heated with a resistance powdered by the self-produced electric power or heated externally with respect to the reactor by an independent and autonomous heat source.

Both these factors can be used in order to control the reaction rate and therefore the hydrogen amount produced in the unit of time.

Particularly the hydrogen amount increases with the increase of the temperature.

Analogously the hydrogen amount increases with the increase of the concentration of sodium hydroxide or potassium hydroxide.

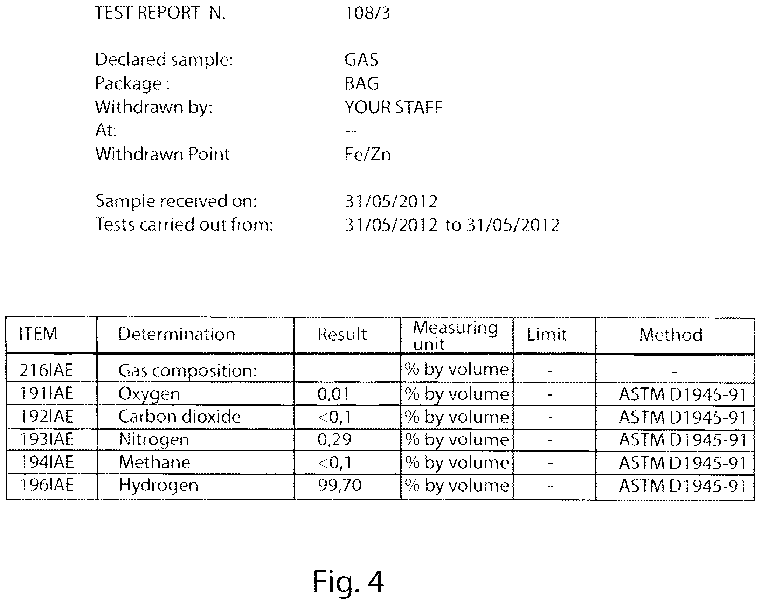

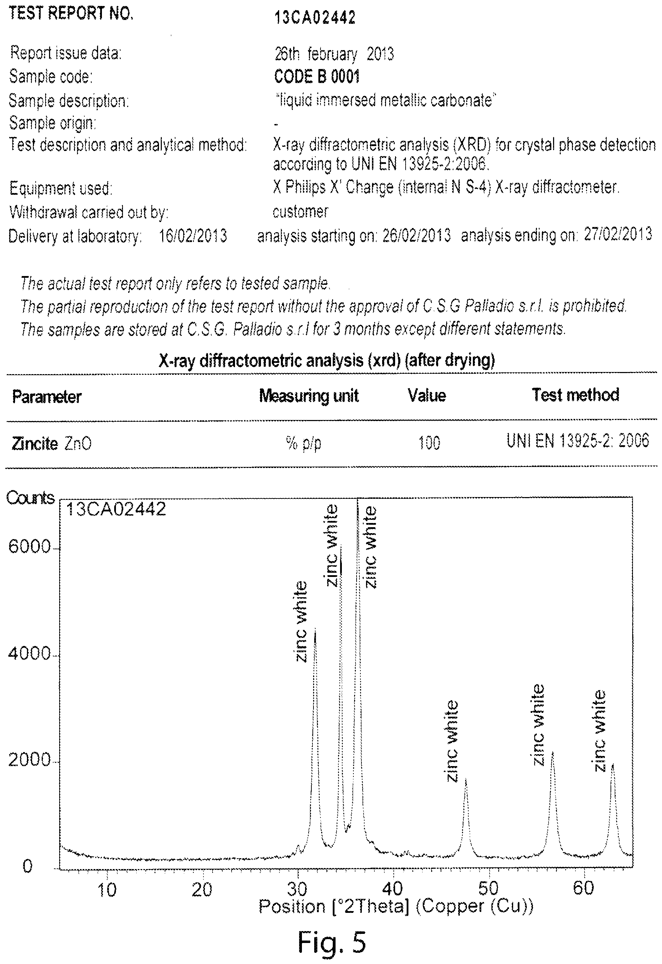

As to the produced hydrogen, the same currently has a purity of 99.7% as shown in figure 4. As to zinc oxide the same is pure, as from test report shown in figure 5.

Tests have been carried out and the results thereof are reported in the following table I, which provides the production values measured with different configurations.

Below pH and ORP values for typical solutions are reported, NaOH being selected for tests like electrolyte

| Water (gr) | NaOH (gr) | Saccharose (gr) | pH | ORP (mV) | Temp (°C) |
|---|---|---|---|---|---|
| 1.000 | 120 | 200 | 13.30 | 252 | 17 |
| 1.000 | 240 | 200 | 12.99 | 534 | 17 |
| 1.000 | 360 | 200 | 12.28 | 668 | 17 |

The composition of the two tested liquids subjected is as below:
liquid "A"

| | | |
|---|---|---|
| 1.H₂O (Water) 1 liter | g | 1.000 |
| 2.NaOH (Sodium Hydroxide) | g | 200 |
| 3.C₁₂H₂₂O₁₁ (Saccharose) | g | 200 |

liquid "B"

| | | |
|---|---|---|
| 1.H₂O (Water) 1 liter | g | 1.000 |
| 2.NaOH (Sodium Hydroxide) | g | 200 |

### Preparation of the liquid "A" with one liter of water

1.Weigh 1000 g of water;
2.Weigh 200 g of sodium hydroxide;
3.Weigh 200 g of saccharose;
4.Separate into 2 containers the 50% water (500 g);
5. Pour in the first water container 200 g of sodium hydroxide, stir and allow to cool;
6. Pour in the second water container saccharose, stir until the saccharose is completely dissolved;
7. Wait until the liquid with sodium hydroxide is cold and then blend the 2 liquids;
8.Leave to stand until the liquid loses its opacity and remains clear.

**Table I**

| Test no. | Num Fe | Width Fe | Height Fe | Sup tot | Num Zn | Width Zn | Height Zn | Sup tot | Temp | H2 Prod "A" | H2 Prod "B" |
|---|---|---|---|---|---|---|---|---|---|---|---|
| | | m | m | m2 | | m | m | m2 | °C | l/min | l/min |
| 1 | 14 | 0.18 | 0.1 | 0.504 | 14 | 0.18 | 0.1 | 0.504 | 16 | 0.50 | 0.17 |
| 2 | 32 | 0.2 | 0.1 | 1.28 | 32 | 0.2 | 0.1 | 1.28 | 15 | 0.50 | 0.16 |
| 3 | 24 | 0.06 | 0.05 | 0.144 | 24 | 0.06 | 0.05 | 0.144 | 16 | 0.14 | 0.04 |
| 4 | 2 | 0.18 | 0.1 | 0.072 | 2 | 0.18 | 0.1 | 0.072 | 16 | 0.07 | 0.02 |

- tests 1,3,4 are carried out by connecting plates in short circuit;
- test 2 is carried out closing the external circuit on a resistive load of 10 ohm.

The dimensions of the reactor cell remained unaltered during various tests and are 30x40x20 cm. The hydrogen production, the other factors being the same, is proportional to the total surface of the iron plates, provided that the iron and zinc plates are arranged alternatively thereamong, so that an iron surface faces a zinc surface (except the two extremities of the package). The thickness of the plates is irrelevant with respect to the hydrogen production, in facts only the material of the surface facing the opposite metal is involved. The thickness of the zinc plates (the metal that is consumed) practically determines the operating hour number of the package before replacing thereof. In the carried out tests the thickness of the plates was 2 mm.

The distance from iron to zinc plates is very important also, which distance must be enough small so that the electric field strength is sufficient to trigger the reaction [6]. In the carried out tests the distance of the plates was 2 mm.

Test 2 displays that the withdrawal of current from an external load reduces the hydrogen production.

The effect of the temperature, for the pair of metals Fe and Zn, is as below (ref. test 3):

| | | | | | | |
|---|---|---|---|---|---|---|
| Temp °C | 16 | 18 | 20 | 22 | 24 | 26 |
| H₂ l/min | 0.14 | 0.19 | 0.24 | 0.29 | 0.35 | 0.40 |

As a check of the fact that the introduction of saccharose in the solution results in an hydrogen production equal to approximately 3 times that obtained without the saccharose use, as proved in the tests using flow meter, a long lasting experiment in order to measure the consumed zinc amount was carried out.

The experiment was carried out according to the configuration corresponding to test 4 of the preceding table.

The results are as below:

| | | |
|---|---|---|
| Zn plates no. | | 2 |
| Fe plates no. | | 2 |
| plate dimensions | | 18x10x0.2 cm |
| sup Zn plates | m2 | 0.072 |
| Zn plates weight | gr. | 479 |
| liquid | | |
| H2O | gr | 1000 |
| NaOH | gr | 200 |
| Saccharose | gr | 200 |
| | | |
| Operating hours | h | 71 |
| total plate consumption | gr | 271 |
| plate residual weight | gr | 208 |
| hourly consumption | gr | 3.8169 |
| H2 average production | l/min | 0.0714 |
| H2 total production | l | 304 gr 25.08 |

For the test conditions the density of 0.0825 g/l is assumed at T=15°C and P=1 atm.

Now it must be pointed out that produced hydrogen liters and grams of consumed zinc are measured.

If the hydrogen was produced only by the reaction

[5] Zn + H₂O -> ZnO + H₂

the amount in grams of hydrogen would have to be:
consumed Zn/pa(Zn) * pa (H₂) = gr 271/65*2 = gr 8.34
which, with the cited density of 0.0825 g/l, results in 101,09 liters of hydrogen.

As can be seen the ratio of hydrogen volume calculated from the reaction [5] to measured volume is of approximately 1:3.

This means that the reaction [5] is not the unique reaction that occurs. In fact, according to above reported, the reaction involving isomers of the glucose is also reported.

As above reported, at the end of the preparation process the sugars are in the form of glucose, fructose and mannose under stable equilibrium conditions among isomeric forms thereof.

Such isomers are separated under the action of the electrical current resulting in the production of methanol and formic acid, releasing molecular hydrogen:

[6] C₆H₁₂O₆ + 4H₂O -> 2CH₃OH + 4HCOOH + 2H₂

The simple sugar presence (in this case hexose monosaccharides) in solution is therefore the true main mechanism for the hydrogen production.

As an alternative to the solution obtained dissolving saccharose in water a solution obtained as below can be used.

The reason to find an alternative to the use of saccharose , commercially available as normal refined sugar (home sugar), is based on the search of an ecological route thus avoiding waste products associated to the various phases of the refining process of sugarcane or sugar beet.

Herbaceous species that have been tested are those used in the usual ornament gardens and resulting from grass cutting (not wooden green shaft).

Further spontaneously growing herbaceous species, i.e. those harbored by uncultivated grasslands at Mediterranean latitudes, collected by simple reaping, have been tested.

In addition also mixtures consisting of food waste from fruit and vegetable markets have been tested (wide leaf vegetables, potatoes, carrots and vegetables of miscellaneous type).

In particular there are suitable species of the families like brassicaceaes, asteraceaes, chenopodiaceaes, solanaceaes. All these vegetable species contain complex sugars.

However because of the poor water solubility of polysaccharides, due to large molecules thereof only superficially hydratable, a process suitable to breakdown the long chains in smaller molecules has been envisaged. Moreover it has been necessary to eliminate, by filtering, cellulose and other fibers, together with the starch that thickens during the boiling operation.

The presence of vegetable proteins remaining in the solution does not interfere with the hydrogen production. The only apparent effect is the abundant foam production on the free surface.

Below an example wherein the saccharose according to tests 1 - 4 has been replaced, as described in the preceding paragraphs, is reported.

### EXAMPLE

Type of the liquid for a zinc/iron pair

| | | |
|---|---|---|
| 1. HO₂ (Water) 1 liter | g | 1.000 |
| 2. NaOH (Sodium Hydroxide) | g | 200 |
| 3. Herbaceous substance (dry weight) | g | 100 |

### Preparation of the liquid with one liter of water for the zinc/iron pair

1. Weigh 1000 g of water.
2. Weigh 200 g of sodium hydroxide.
3. Weigh 100 g of fresh spontaneously growing herbaceous substance (not wooden green shaft).
4. Boil for approximately 1 hour the herbaceous substance in water and allow to cool so that the water is absorbed as much as possible by the grass.
5. Filter all and macerate so that only vegetable fibers remain outside. The filtered liquid is of brown color and not green anymore, thus proving the chlorophyll breakdown.
6. Introduce sodium hydroxide and leave to macerate all for approximately 12 hours, in the first hours an ammonia similar smell can be noticed; it will vanish within 6 hours since the addition of sodium hydroxide. NH₄⁺ (ammonium ion) is generated as a result of breakdown process of vegetable proteins by sodium hydroxide.
7. Wait until the liquid containing sodium hydroxide is cold and also small fiber particles remained on the bottom drain and then filter it again.
8. The liquid is ready to be used, having transformed the chlorophyll and polysaccharides (C₆H₁₀O₅)n in oligosaccharides and simple sugars.Substantially in the described process occurs the reverse of the photosynthetic cycle for the glucose synthesis and polysaccharide derivatives.The reactor used in already described test 3 displayed, using the solution as for the preceding example, the following results:

| Test no. | Num Fe | Width Fe | Height Fe | Sup tot | Num Zn | Width Zn | Height Zn | Sup tot | Temp | Prod H2 |
|---|---|---|---|---|---|---|---|---|---|---|
| | | m | m | m2 | | m | m | m2 | °C | l/min |
| 3 | 24 | 0.06 | 0.05 | 0.144 | 24 | 0.06 | 0.05 | 0.144 | 16 | 0.18 |

With the following course of the hydrogen production to the variation of the temperature:

| | | | | | | |
|---|---|---|---|---|---|---|
| Temp °C | 16 | 18 | 20 | 22 | 24 | 26 |
| H₂ l/min | 0.18 | 0.24 | 0.30 | 0.38 | 0.43 | 0.49 |

The present invention has been described by an illustrative, but not limitative way, according to preferred embodiments thereof, but it is to be understood that variations and/or modifications could be carried out by those skilled in the art without thus departing from the relevant scope thereof, as defined according to enclosed claims.

## Claims

1. Reactor (200) for the production of hydrogen and zinc oxide and electric power, said reactor comprising a container, within which there are provided a cell (100) and a solution, said cell (100) providing at least two first zinc elements or plates (1) and at least two second metallic elements or plates (2), said first (1) and second (2) plates being connected by short-circuit or an external load, said solution
comprising at least water, CₙH₂ₙOₙ (n = 3, 4, 5, 6 or 7) and sodium hydroxide or potassium hydroxide, said water, CₙH₂ₙOₙ (n = 3, 4, 5, 6 or 7) and sodium hydroxide or potassium hydroxide, being present in said solution, respectively, according to the following weight ratios:
| | |
|---|---|
| water (H₂O) | 1000g |
| CₙH₂ₙOₙ (n = 3, 4, 5, 6 or 7) | 10g - 700g |
| sodium hydroxide(NaOH) or potassium hydroxide(KOH) | 10g - 700g, |
said cell (100) being immersed within said solution.

2. Reactor according to claim 1, **characterized in that** n = 6 (hexose monosaccharides).

3. Reactor according to claim 1 or 2, **characterized in that** said solution further provides C₁₂H₂₂O₁₁ (insoluble disaccharides other than saccharose and maltose)

4. Reactor according to claim 1, 2 or 3, **characterized in that** said solution further provides fructoligosaccharides (FOS).

5. Reactor according to any of preceding claims, **characterized in that** said at least two second metallic elements or plates (2) are made of a transition metal.

6. Reactor according to claim 5, **characterized in that** said metal is chromium, iron, cobalt, nickel, copper scandium, titanium, vanadium, manganese, particularly iron.

7. Method for the production of hydrogen and zinc oxide, comprising the steps of:
- insertion in a container of at least two first zinc elements or plates (1), and at least two second metallic elements or plates (2);
- insertion in said container of a solution according to any of claims 1 - 4
- extraction of obtained hydrogen and zinc oxide and possibly withdrawal of the electric power produced by the chemical reaction.

8. Method according to claim 7, wherein said at least two second metallic elements or plates (2) are made of a transition metal, particularly chromium, iron, cobalt, nickel, copper scandium, titanium, vanadium, manganese, particularly iron.

9. Method according to any of claims 7 - 8, wherein a plurality of elements is provided, alternatively embodied by said at least two first zinc elements or plates (1) and said at least two second metallic elements or plates (2).

## Patentansprüche

1. Reaktor (200) zur Produktion von Wasserstoff und Zinkoxid sowie elektrischer Energie, wobei der Reaktor ein Behältnis umfasst, innerhalb dessen eine Zelle (100) und eine Lösung bereitgestellt sind, wobei die Zelle (100) mindestens zwei erste Zinkelemente oder -platten (1) und mindestens zwei zweite metallische Elemente oder Platten (2) bereitstellt, wobei die ersten (1) und zweiten (2) Platten durch eine Kurzschlussverbindung oder über eine externe Last verbunden sind, wobei die Lösung mindestens Wasser, CₙH₂ₙOₙ (n = 3, 4, 5, 6 oder 7) und Natriumhydroxid oder Kaliumhydroxid umfasst, wobei das Wasser, CₙH₂ₙOₙ (n = 3, 4, 5, 6 oder 7) und Natriumhydroxid oder Kaliumhydroxid in der Lösung jeweils gemäß den folgenden Gewichtsverhältnissen anwesend sind:
| | |
|---|---|
| Wasser (H₂O | 1.000 g |
| CₙH₂ₙOₙ (n = 3, 4, 5, 6 oder 7) | 10 g - 700 g |
Natriumhydroxid (NaOH) oder Kaliumhydroxid (KOH) 10 g - 700 g, wobei die Zelle (100) in der Lösung eingetaucht ist.

2. Reaktor nach Anspruch 1, **dadurch gekennzeichnet, dass** n = 6 (Hexose-Monosaccharide).

3. Reaktor nach Anspruch 1 oder 2, **dadurch gekennzeichnet, dass** die Lösung ferner C₁₂H₂₂O₁₁ (andere unlösliche Disaccharide als Saccharose und Maltose) bereitstellt.

4. Reaktor nach Anspruch 1, 2 oder 3, **dadurch gekennzeichnet, dass** die Lösung ferner Fructooligosaccharide (FOS) bereitstellt.

5. Reaktor nach irgendeinem der vorhergehenden Ansprüche, **dadurch gekennzeichnet, dass** die genannten mindestens zwei zweiten metallischen Elemente oder Platten (2) aus einem Übergangsmetall gebildet sind.

6. Reaktor nach Anspruch 5, **dadurch gekennzeichnet, dass** das Metall Chrom, Eisen, Kobalt, Nickel, Kupfer, Scandium, Titan, Vanadium, Mangan, insbesondere Eisen ist.

7. Verfahren zur Herstellung von Wasserstoff und Zinkoxid, umfassend die Schritte:
- Einführen von mindestens zwei ersten Zinkelementen oder
- platten (1) und mindestens zwei zweiten metallischen Elementen oder Platten (2) in ein Behältnis;
- Einführen von einer Lösung nach irgendeinem der Ansprüche 1 bis 4 in das Behältnis;
- Extrahieren von erhaltenem Wasserstoff und Zinkoxid und optional Entnehmen der durch die chemische Reaktion erzeugten elektrischen Energie.

8. Verfahren nach Anspruch 7, wobei die mindestens zwei zweiten metallischen Elemente oder Platten (2) aus einem Übergangsmetall, insbesondere Chrom, Eisen, Kobalt, Nickel, Kupfer, Scandium, Titan, Vanadium, Mangan, insbesondere Eisen, gebildet sind.

9. Verfahren nach irgendeinem der Ansprüche 7 bis 8, wobei eine Mehrzahl von Elementen bereitgestellt wird, alternativ repräsentiert durch die genannten mindestens zwei ersten Zinkelemente oder -platten (1) und die mindestens zwei zweiten metallischen Elemente oder Platten (2).

## Revendications

1. Réacteur (200) pour la production d'hydrogène et d'oxyde de zinc et de puissance électrique, ledit réacteur comprenant un conteneur, à l'intérieur duquel sont fournies une cellule (100) et une solution, ladite cellule (100) fournissant au moins deux premiers éléments ou plaques en zinc (1) et au moins deux deuxièmes éléments ou plaques métalliques (2), lesdites premières (1) et deuxièmes (2) plaques étant connectées par court-circuit ou par une charge externe, ladite solution comprenant au moins de l'eau, CₙH₂ₙOₙ (n = 3, 4, 5, 6 ou 7) et de l'hydroxyde de sodium ou de l'hydroxyde de potassium, lesdits eau, CₙH₂ₙOₙ (n = 3, 4, 5, 6 ou 7) et hydroxyde de sodium ou hydroxyde de potassium, étant présents dans ladite solution, respectivement, selon les rapports de poids suivants :
| | |
|---|---|
| eau(H₂O) | 1000g |
| CₙH₂ₙOₙ (n = 3, 4, 5, 6 ou 7) | 10g - 700g |
hydroxyde de sodium (NaOH) ou hydroxyde de potassium (KOH) 10g-700g, ladite cellule (100) étant immergée dans ladite solution.

2. Réacteur selon la revendication 1, **caractérisé en ce que** n = 6 (monosaccharides d'hexose).

3. Réacteur selon la revendication 1 ou 2, **caractérisé en ce que** ladite solution fournit en outre du C₁₂H₂₂O₁₁ (disaccharides insolubles autres que le saccharose et le maltose)

4. Réacteur selon la revendication 1, 2 ou 3, **caractérisé en ce que** ladite solution fournit en outre des fructoligosaccharides (FOS).

5. Réacteur selon l'une quelconque des revendications précédentes, **caractérisé en ce qu'**au moins deux deuxièmes éléments ou plaques métalliques (2) sont faits d'un métal de transition.

6. Réacteur selon la revendication 5, **caractérisé en ce que** ledit métal est du chrome, du fer, du cobalt, du nickel, du cuivre du scandium, du titane, du vanadium, du manganèse, particulièrement du fer.

7. Procédé de production d'hydrogène et d'oxyde de zinc, comprenant les étapes de :
- insertion dans un conteneur d'au moins deux premiers éléments ou plaques en zinc (1), et d'au moins deux deuxièmes éléments ou plaques métalliques (2) ;
- insertion dans ledit conteneur d'une solution selon l'une quelconque des revendications 1 à 4
- extraction de l'hydrogène et de l'oxyde de zinc obtenus et éventuellement retrait de la puissance électrique produite par la réaction chimique.

8. Procédé selon la revendication 7, dans lequel lesdits au moins deux deuxièmes éléments ou plaques métalliques (2) sont faits d'un métal de transition, particulièrement du chrome, du fer, du cobalt, du nickel, du cuivre du scandium, du titane, du vanadium, du manganèse, particulièrement du fer.

9. Procédé selon l'une quelconque des revendications 7 à 8, dans lequel une pluralité d'éléments est fournie, alternativement réalisée avec lesdits au moins deux premiers éléments ou plaques en zinc (1) et lesdits au moins deux deuxièmes éléments ou plaques métalliques (2).
